# EUROPÄISCHE PATENTSCHRIFT

(11) **EP 1 321 023 B1**
(45) Veröffentlichungstag und Bekanntmachung des Hinweises auf die Patenterteilung: **25.02.2009**
(21) Anmeldenummer: 02026556.7
(22) Anmeldetag: 28.11.2002
(51) Int. Cl.: A01D 41/12

(54) **Verfahren zur Verlustbestimmung an landwirtschaftlichen Erntemaschinen**
Method of determining the loss in agricultural machines
Procédé de determination des pertes dans des machines agricoles

(30) Priorität: 18.12.2001 DE 10162354
(43) Veröffentlichungstag der Anmeldung: 25.06.2003
(73) Patentinhaber: CLAAS Selbstfahrende Erntemaschinen GmbH, 33428 Harsewinkel (DE)
(72) Erfinder: Bernhardt, Gerd, Prof., 01728 Bannewitz/OT Hänichen (DE); Hübner, Ralf, Dr., 01097 Dresden (DE)

(56) Entgegenhaltungen:
- EP-A- 0 347 979
- EP-A- 0 728 409
- DE-A- 19 807 145
- US-A- 4 360 998
- US-A- 5 015 997

## Beschreibung

Die Erfindung betrifft ein Verfahren zur Bestimmung des Verlustes einer Erntemaschine gemäß dem Oberbegriff des Anspruchs 1 und eine Vorrichtung zur Durchführung dieses Verfahrens nach dem Oberbegriff des Anspruchs 14.

Ein derartiges Verfahren offenbart u.a. die EP 0 728 409. Den als Abscheidesiebe ausgeführten Abscheideorganen der landwirtschaftlichen Erntemaschine sind untenseitig eine Vielzahl sogenannter Abscheidesensoren zugeordnet, die während des Betriebes der Erntemaschine in Abhängigkeit von der abgeschiedenen Erntegutmenge Messwerte generieren, die in einer Auswerteinheit zur Ermittlung eines Abscheideverlaufs herangezogen werden. Mit diesem ermittelten Abscheideverlauf kann zwar die Qualität der Abscheideorgane eingeschätzt werden, eine Aussage über den Verlust der Erntemaschine lässt dieses Verfahren jedoch nicht zu.

Zudem wird in der US 5,015,997 ein übliches Verfahren zur Verlustbestimmung an landwirtschaftlichen Erntemaschinen beschrieben. Im Wesentlichen beruht ein solches Verfahren darauf, dass den Abscheideorganen sogenannte konventionelle Abscheidesensoren nachgeordnet sind, deren generierten Messsignale in Beziehung zum Verlust der gesamten Erntemaschine oder des sensierten Arbeitsorgans stehen. In der Regel sind derartige Abscheidesensoren aus einem Impulsaufnehmer und einem mit diesem in Wirkverbindung stehenden Schwingungsaufnehmer aufgebaut. Deshalb ist ihr Messwert sehr stark von den Eigenschaften des Erntegutes abhängig, sodass selbst während eines Erntetages starke Messwertschwankungen auftreten und somit eine häufige Kalibrierung der Abscheidesensoren notwendig ist. Zudem können derartige Abscheidesensoren nur die wirklich abgeschiedenen Bestandteile des Erntegutstromes erfassen. Folglich hat auch die Verteilung der Komponenten innerhalb des Erntegutstromes, der die Abscheideorgane ohne abgeschieden zu werden, verlässt, einen Einfluss auf die Messwerte der Abscheidesensoren, was zwangsläufig zu einer ungenauen Bestimmung des tatsächlichen Verlustes führt.

Ein weiteres Verfahren zur Verlustbestimmung an landwirtschaftlichen Erntemaschinen wird in der US 4 360 998 beschrieben.

Der Erfindung liegt deshalb die Aufgabe zugrunde, die Verlustbestimmung einer Erntemaschine weitgehend unabhängig von den Eigenschaften des Erntegutes zu gestalten, sodass häufiges Kalibrieren des Messsystems bei gleicher Gutart nicht erforderlich ist.

Indem der erntegutabscheidende Bereich eines oder mehrerer Abscheideorgane in Abscheidezonen unterteil ist, wobei die Abscheideeffizienz zumindest eines Teils der Abscheidezonen ermittelt und zu einer Kenngröße verrechnet wird und für diese ermittelte Kenngröße in der Auswerteinheit zumindest eine Kennlinie hinterlegt ist, aus der sich der der ermittelten Kenngröße entsprechende Verlust ergibt, wird eine direkte Verlustmessung auf der Erntemaschine vermieden. Dies hat vor allem den Vorteil, dass erntegutabhängige Einflüsse auf die Ermittlung des Verlustes erheblich reduziert werden. Insbesondere wird so dafür gesorgt, dass auf häufiges Kalibrieren des Messsystems verzichtet werden kann. Ferner spielt die Verteilung der den Verlust repräsentierenden Körner in der aus dem Mähdrescher austretenden Gutschicht keine Rolle mehr, da die real vorhandenen Verluste nicht mehr explizit gemessen sondern über die erfindungsgemäße Kenngröße indirekt bestimmt werden.

In einer vorteilhaften Weiterbildung der Erfindung wird das Verfahren vor allem dadurch erheblich vereinfacht, dass die über der in Gutaustragrichtung letzten Abscheidezone nicht abgeschiedenen, die Verlustemasse bildende Erntegutmenge vernachlässigt und eine vollständige Abscheidung in dieser letzten Abscheidezone angenommen wird. Damit wird das Verfahren vollständig unabhängig von der häufigen sensorischen Erfassung des Verlustes der Erntemaschine.

Um die Abscheideeffizienz der Erntemaschine präzise bestimmen zu können, ist es von Vorteil, wenn der erntegutabscheidende Bereich des oder der Arbeitsorgane in aneinandergrenzende Abscheidezonen unterteilt ist und jeder Abscheidezone zumindest ein Abscheidesensor zur Generierung eines der abgeschiedenen Erntegutmenge adäquaten Signals zugeordnet ist. Die Genauigkeit des Abscheideeffizienzwertes einer Abscheidezone wird dabei um so höher sein, je mehr Abscheidesensoren in der jeweiligen Abscheidezone angeordnet sind und die jeweils der in ihrem Wirkbereich abgeschiedenen Erntegutmenge adäquate Signale generieren.

Eine besonders einfache Verrechnung der durch die Abscheidesensoren generierten Signale wird dann erreicht, wenn die an die Auswerteinheit übertragenen Signale der Abscheidesensoren zunächst für jede Abscheidezone zu einem Abscheideeffizienswert dieser jeweiligen Abscheidezone verrechnet werden. Im einfachsten Fall wird dies durch Mittelwertbildung erreicht, wobei der Abscheideeffizienzwert durch Integration des Abscheideverlaufs innerhalb der jeweiligen Abscheidezone ermittelt wird und sich aus dem Verhältnis zwischen der über der jeweiligen Abscheidezone abgeschiedenen Erntegutmenge und der dieser Abscheidezone zugeführten abzuscheidenden Erntegutmenge ergibt.

Die Ermittlung eines den momentanen Abscheidebedingungen entsprechenden Verlustwertes wird dann erheblich vereinfacht, wenn die Abscheideeffizienzwerte zumindest eines Teils der Abscheidezonen in der Auswerteinheit zu einem einzigen Abscheideeffizienzwert verrechnet werden, der dann die erfindungsgemäße Kenngröße zur Ermittlung des Verlustes der Erntemaschine bildet.

Damit der berechnete, die erfindungsgemäße Kenngröße bildende mittlere Abscheideeffizienzwert zur Ermittlung des Verlustes der Erntemaschine herangezogen werden kann, stellt in einer vorteilhaften Weiterbildung der Erfindung die in der Auswerteinheit hinterlegte wenigstens eine Kennlinie den Verlust in Abhängigkeit von einem mittleren Abscheideeffizienzwert dar.

Um die Genauigkeit der in erfindungsgemäßer Weise ermittelten Verluste der Erntemaschine zu verbessern, können die in der Auswerteinheit hinterlegte wenigstens eine oder mehreren Kennlinien in Abhängigkeit von erntegutspezifischen Parametern wie insbesondere der Gutart und/oder der Erntegutfeuchte hinterlegt sein.

In einer vorteilhaften Weiterbildung der Erfindung können die in der Auswerteinheit hinterlegten Kennlinien änderbar sein. Ein besonders einfache Art der Änderung der Kennlinien ergibt sich dann, wenn die der abgeschiedenen Erntegutmenge adäquaten Signale der Abscheidesensoren in Abhängigkeit von verschiedenen Erntegutdurchsätzen in der Auswerteinheit mittleren Abscheideeffizienzwerten verrechnet werden, wobei den mittleren Abscheideeffizienzwerte jeweils Verlustwerte eines bestimmten Durchsatzes zugeordnet werden, die dann das Wertepaar der neu zu generierenden Kennlinie bilden. Dies schafft vor allem die Möglichkeit, dass der Fahrer der Erntemaschine selbst neue Kennlinien erstellen kann.

In vorteilhafter Weiterbildung der Erfindung können dieses Verlustwerte entweder auf der Erntemaschine selbst ermittelt oder separat von dieser aufgenommen und in der Auswerteinheit hinterlegt werden.

Eine konstruktiv besonders einfach ausgeführte Vorrichtung zur Durchführung des erfindungsgemäßen Verfahrens wird dann erreicht, wenn dem oder den Arbeitsorganen der Erntemaschine ein oder mehrere Abscheidesensoren im erntegutabscheidenden Bereich zugeordnet sind, die mittels Datenübertragungssystemen mit einer Auswerteinheit in Wirkverbindung stehen, wobei die Abscheidesensoren den erntegutabscheidenden Bereich in voneinander getrennte Abscheidezonen unterteilt und in der Auswerteinheit zumindest eine Kennlinie hinterlegt ist, aus der sich für die ermittelte Kenngröße ein Verlustwert ergibt. Dabei kann die Abgrenzung der Abscheidezonen voneinander sowohl mechanisch durch Trennstege oder software-seitig durch entsprechende Programmierung erfolgen.

Weitere vorteilhafte Ausgestaltungen sind Gegenstand weiterer Unteransprüche und werden nachfolgend anhand von Zeichnungen näher erläutert.

Es zeigen:
- Figur 1: die schematische Seitenansicht eines Mähdreschers
- Figur 2: eine Detailansicht des Mähdreschers nach Fig. 1 mit erfindungsgemäßen Abscheidesensoren und Auswerteinheit
- Figur 2a: Detailansicht nach Figur 2
- Figur 3: eine Funktionsschema der erfindungsgemäßen Auswerteinheit.

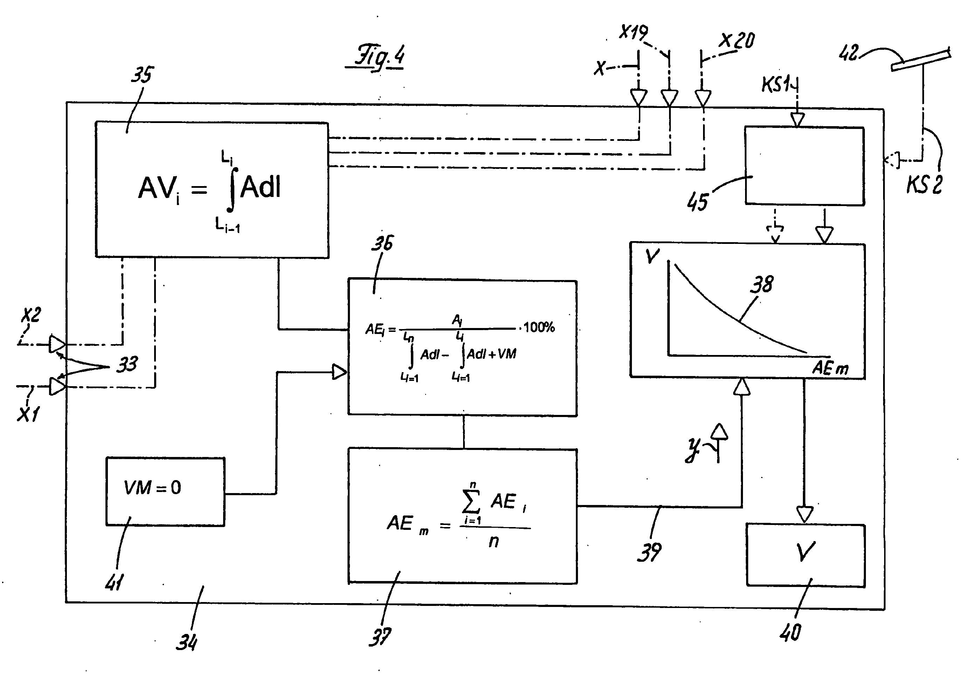

- Figur 4: ein weiteres Funktionsschema der erfindungsgemäßen Auswerteinheit.

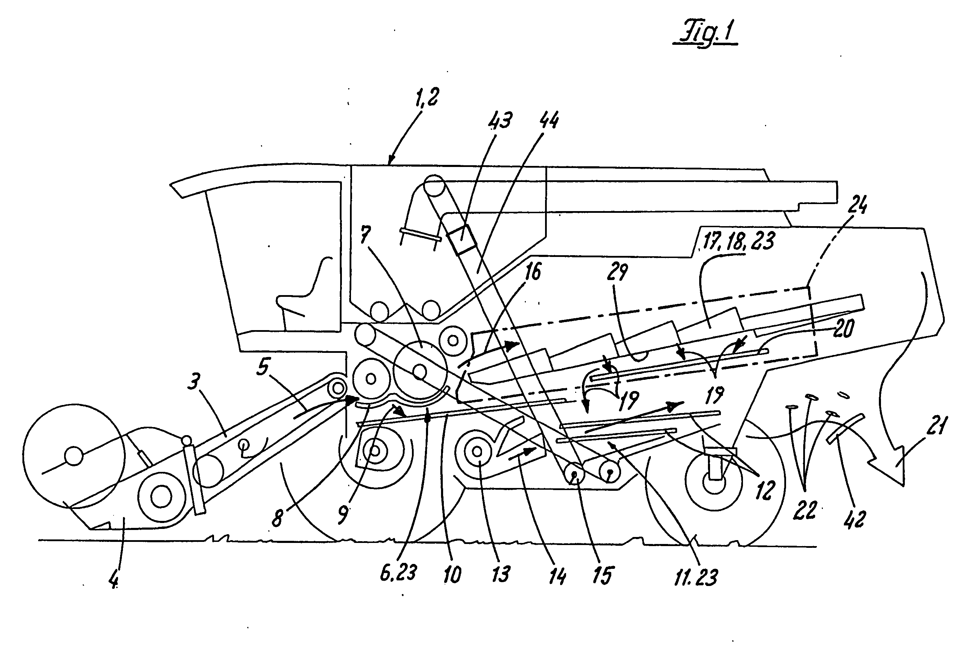

In Fig. 1 ist eine als Mähdrescher 2 ausgeführte landwirtschaftliche Erntemaschine 1 dargestellt deren frontseitig angeordneter Schrägförderer 3 das von einem beliebig ausgeführten Vorsatzgerät 4 abgeerntete und zu einem Erntegutstrang 5 zusammengeführte Erntegut in seinem rückwärtigen Bereich an ein Dreschwerk 6 übergibt. Dabei wird der Erntegutstrang 5 in an sich bekannter Weise zwischen einer oder mehreren umlaufenden Dreschtrommeln 7 und diese zumindest teilweise umschlingenden Dresch- und Abscheidekörben 8 hindurchgefördert. Während dieses Fördervorgangs werden die Früchte aus den Fruchtständen herausgelöst und zu einem wesentlichen Teil im Bereich der Dresch- und Abscheidekörbe 8 zusammen mit Kurzstroh und Spreu als ein erster Erntegutstrom 9 abgeschieden und einem diesen Dresch- und Abscheidekörben 8 untenseitig zugeordneten Vorbereitungsboden 10 zugeführt. Über den Vorbereitungsboden 10 gelangt dieser erste Erntegutstrom 9 schließlich in eine Reinigungseinrichtung 11, die mittels schwingender Siebe 12 und durch Gebläse 13 erzeugte Luftströmungen 14 eine Trennung der sogenannten Nichtkornbestandteile von den Früchten, bei der Ernte von Getreide wären das die Körner, realisiert. Während die Nichtkornbestandteile aufgrund der Luftströmung 14 aus der Erntemaschine 1 herausgeblasen werden, werden die gereinigten Körner im einfachsten Fall mittels Förderschnecken 15 aus der Reinigungseinrichtung 11 abgefördert.
Ein weiterer Erntegutstrom 16 tritt im rückwärtigen Bereich der Drescheinrichtung 6 aus dieser aus und wird im dargestellten Ausführungsbeispiel einer als Hordenschüttler 18 ausgeführten Korn-Stroh-Trenneinrichtung 17 zugeführt. Während der Bewegung dieses Erntegutstromes 16 auf der Korn-Stroh-Trenneinrichtung 17 wird ein weiterer Erntegutstrom 19 im untenseitigen Bereich der Korn-Stroh-Trenneinrichtung 17 abgeschieden, der im Wesentlichen ebenfalls aus Körnern, Kurzstroh und Spreu besteht. Über einen unterhalb des Hordenschüttlers 18 angeordneten geneigten Rücklaufboden 20 gelangt dieser Erntegutstrom 19 ebenfalls in die Reinigungseinrichtung 11, wobei, wie bereits beschrieben, die Körner von den Nichtkornbestandteilen getrennt werden.
Im rückwärtigen Bereich des Mähdreschers werden die nicht verwertbaren Anteile der verschiedenen Erntegutströme 9, 16, 19 aus dem Mähdrescher 2 herausgefördert, wobei dieser Erntegutstrom 21 im Wesentlichen aus Nichtkornbestandteilen wie Stroh und Spreu besteht. Ein geringer Anteil dieses Erntegutstromes 21 wird jedoch von den Verlust der Erntemaschine 1 verkörpernden Körner 22 gebildet.
Im dargestellten Ausführungsbeispiel bilden das Dreschwerk 6, die Korn-Stroh-Trenneinrichtung 17 und die Reinigungseinrichtung 11 Abscheideorgane 23 an denen körnerhaltige Erntegutströme 9, 16, 19, 21 abgeschieden werden, sodass jedes dieser Abscheideorgane 23 ursächlich für Kornverluste verantwortlich sein kann. Folglich kann die nachfolgend am Beispiel der Drescheinrichtung 6 und des Hordenschüttlers 18 beschriebene Erfindung in gleicher Weise auch an der Reinigungseinrichtung 11 oder nur einem dieser Abscheideorgane 23 eingesetzt werden, um die beschriebenen Effekte zu erzielen. Zudem liegt es im Rahmen der Erfindung, das zu beschreibende Verfahren auf Mähdrescher 2 anzuwenden, die an Stelle des Hordenschüttlers 18 einen Axialtrennrotor 24 aufweisen oder deren Dresch- und Trenneinrichtungen 6, 17 durch an sich bekannte und nicht näher dargestellte Dresch- und Trennrotoren ersetzt sind.

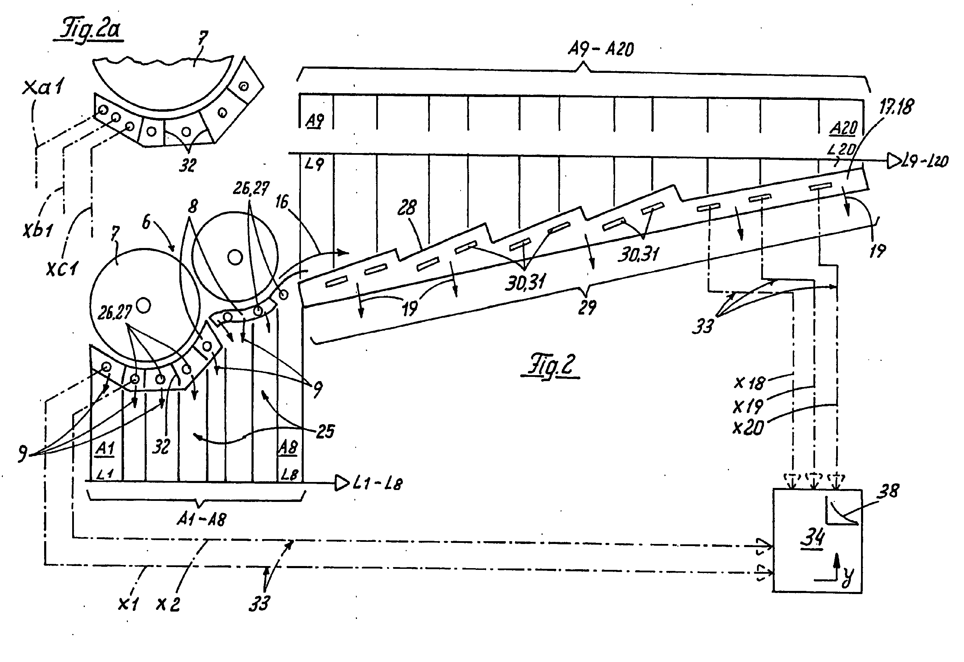

Fig. 2 zeigt eine Detailansicht der Drescheinrichtung 6 mit nachgeordnetem Hordenschüttler 18. Den Dresch- und Abscheidekörben 8 sind in ihrem erntegutabscheidenden Bereich 25 eine Vielzahl von an sich bekannten Abscheidesensoren 26 zugeordnet, die im einfachsten Fall als Stabsensoren 27 ausgeführt sind und sich zumindest teilweise über die Breite der Drescheinrichtung 6 erstrecken. Beim Durchtreten des im Bereich der Drescheinrichtung 6 abgeschiedenen Erntegutstromes 9 werden die in dem erntegutabscheidenden Bereich 25 der Drescheinrichtung 6 angeordneten Abscheidesensoren 26 in Abhängigkeit von der Menge der in dem Erntegutstrom 9 enthaltenen Körner mehr oder weniger häufig kontaktiert. Der dabei in den stabförmig ausgeführten Abscheidesensoren 26 erzeugte Körperschall wird zur Bestimmung der Menge der abgeschiedenen Körner herangezogen. Dieses Verfahren ist aufgrund seiner relativ störungsunanfälligen Arbeitsweise weit verbreitet. Die Abscheidesensoren 26 dieses Verfahrens werden auch als sogenannte "Klopfsensoren" bezeichnet.
Ferner sind dem Hordenschüttler 18 unterhalb seiner Trennfläche 28 in seinem erntegutabscheidenden Bereich 29 ebenfalls eine Vielzahl von Abscheidesensoren 30 zugeordnet, die einfachstenfalls auch als Stabsensoren 31 ausgeführt sein können und sich zumindest über einen Teil der Breite der Korn-Stroh-Trenneinrichtung 17 erstrecken. Auch hier kommt es beim Durchtreten des im Bereich des Hordenschüttlers 18 abgeschiedenen Erntegutstromes 19 zum Auftreffen der in dem Erntegutstrom 19 befindlichen Körner 22 auf die Abscheidesensoren 30, 31 die dann wiederum in Abhängigkeit vom Körperschall Signale generieren, die zur Ermittlung der Menge abgeschiedener Körner herangezogen werden können.

In erfindugsgemäßer Weise sind jedem Abscheidesensor 26, 30 Abscheidezonen A1-A20 zugeordnet, wobei sich benachbarte Abscheidezonen A1-A20 bereichsweise nicht überdecken. Im dargestellten Ausführungbeispiel werden die Abscheidezonen A1-A8 mechanisch durch Querstege 32 räumlich voneinander abgegrenzt. Demgegenüber verfügen die Abscheidezonen A9-A20 des Hordenschüttlers 18 nicht über Mittel zur Abgrenzung der einzelnen Abscheidezonen A9-A20 voneinander. Hier wird die erfindungsgemäße Abgrenzung der Abscheidezonen A9-A20 untereinander, wie noch näher zu beschreiben ist, software-seitig vorgegeben. Es liegt im Rahmen der Erfindung, dass die Art der Abgrenzung der Abscheidezonen A1-A20 voneinander völlig frei ist und abweichend vom hier dargestellten Ausführungsbeispiel ausschließlich mechanisch oder software-seitig oder in jeder beliebigen Mischform erfolgen kann.

Die in den Abscheidesensoren 26, 30 generierten der abgeschiedenen Erntegutmenge adäquaten Signale X1-X20 werden über geeignete Datenübertragungssysteme 33 an die erfindungsgemäße Auswerteinheit 34 übertragen. Aus Vereinfachungsgründen sind in Fig. 2 nur für ausgewählte Abscheidesensoren 26, 30 die Datenübertragungssysteme 33 dargestellt. Es liegt im Rahmen der Erfindung, dass die Datenübertragungssysteme 33 Leitungen oder drahtlose Übertragungsstrecken sein können.

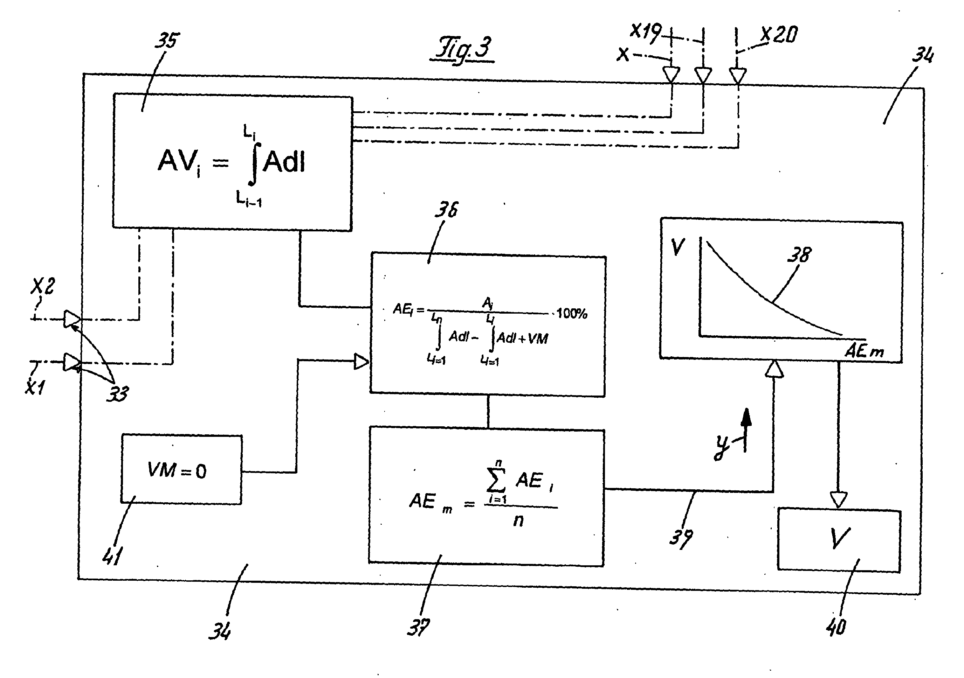

Gemäß der Prinzipdarstellung in Fig. 3 werden die der abgeschiedenen Erntegutmenge adäquaten Signale X1-X20 gemäß rechnerischem Schritt 35 zu Abscheideverläufen AV1-AV20 verrechnet, indem die sensierten Abscheidungen X1-X20 einer Abscheidezone A1-A20 über der Länge L1-L20 der Abscheidezone A1-A20 integriert werden. In einem weiteren rechnerischen Schritt 36 wird ein Abscheideeffizienzwert AE1-AE20 ermittelt, der einen Verhältniswert zwischen der in der jeweiligen Abscheidezone A1-A20 abgeschiedenen Erntegutmenge 19 und der dieser Abscheidezone A1-A20 zugeführten abzuscheidenden Erntegutmenge, im Ausführungsbeispiel die Körner 22, bildet. In einem weiteren Rechenschritt 37 werden diese Abscheideeffizienzwerte AE1-AE20 in der Auswerteinheit 34 zu einem mittleren Abscheideeffizienzwert AEm zusammengefasst. In erfindungsgemäßer Weise ist in der Auswerteinheit 34 zumindest eine Kennlinie 38 hinterlegt, die einem bestimmten mittleren Abscheideeffizienzwert AEm einen bestimmten Verlustwert V zuordnet. In einem weiteren mathematischen Schritt 39 wird nun dem errechneten mittleren Abscheideeffizienzwert AEm ein konkreter Verlustwert V der hinterlegten Kennlinie 38 zugeordnet und in einer Anzeige 40 in an sich bekannter Weise sichtbar gemacht. Damit bildet die errechnete mittlere Abscheideeffizienz AEm die aus den Einzelabscheideeffizienzwerten AE1-AE20 zu ermittelnde Kenngröße Y für die in der Auswerteinheit 34 zumindest eine Kennlinie 38 hinterlegt ist, aus der sich für die ermittelte Kenngröße Y ein konkreter Verlustwert V ergibt.

Erfindungsgemäß wird angenommen, dass die der letzten Abscheidezone A20 des Hordenschüttlers 18 zugeführte Menge an Körnern 22 vollständig an dieser abgeschieden wird, sodass die auf diese Weise vernachlässigte Kornverlustmasse VM gemäß Blockbild 41 gleich 0 ist.

Es liegt ferner im Rahmen der Erfindung, dass den Abscheidezonen A1-A20 oder einem Teil der Abscheidezonen A1-A20 mehrere Abscheidesensoren 26, 30 zugeordnet sein können, deren Signale Xa1-Xc1 zunächst gemäß dem ersten Rechenschritt 35 der Auswerteinheit 34 zu Abscheideverläufen AV1-AV20 verrechnet werden. Damit das erfindungsgemäße Verfahren flexibel eingesetzt werden kann, können in der Auswerteinheit 34 auch mehrere Kennlinien 38 in Abhängigkeit von verschiedenen erntegutspezifischen Parametern hinterlegt sein, wobei die Gutart und der Feuchteanteil des Erntegutes die wesentlichsten erntegutspezifischen Parameter sind.

In einer vorteilhaften Weiterbildung der Erfindung sind die in der Auswerteinheit 34 hinterlegten Kennlinien 38 veränderbar oder es können der Auswerteinheit 34 weitere Kennlinien 38 hinzugefügt werden. Im einfachsten Fall wird dies dadurch möglich, dass der Fahrer der Erntemaschine 1 über einen bestimmten Zeitraum definierte Erntegutmengen mittels des Vorsatzgerätes 4 aufnimmt. Der dabei aus dem rückwärtigen Bereich des Mähdreschers 2 austretende Erntegutstrom 21 wird dabei oberhalb an sich bekannter Kornverlustsensoren 42 gefördert. Die aus diesem Erntegutstrom 21 heraustretenden Körner 22 generieren in den Kornverlustsensoren 42 der Körnermasse adäquate Signale KS2. Zudem verfügt der Mähdrescher 2 in an sich bekannter Weise über eine Kornmengensensorik 43 die im einfachsten Fall in zumindest einem Kornelevator 44 des Mähdreschers 2 angeordnet ist und die ein der vom Mähdrescher 2 geernteten Gesamkornmenge adäquates Signal KS1 generiert. In einem ersten Rechenschritt 45 wird aus diesen den jeweiligen Kornmengen adäquaten Signalen KS1, KS2 ein Verlustwert V ermittelt, der dann in Abhängigkeit von den jeweils erfindungsgemäß ermittelten Kenngrößen Y als neue oder weitere Kennlinie 38 in der Auswerteinheit 34 hinterlegt wird. Es liegt im Rahmen der Erfindung, dass die Verlustwerte V auch ohne in und von der Erntemaschine 1 selbst ermittelt worden zu sein, in der Auswerteinheit 34 hinterlegt werden können.

### Bezugszeichenliste

- 1: Erntemaschine
- 2: Mähdrescher
- 3: Schrägförderer
- 4: Vorsatzgerät
- 5: Erntegutstrang
- 6: Dreschwerk
- 7: Dreschtrommel
- 8: Dresch- und Abscheidekorb
- 9: Erntegutstrom
- 10: Vorbereitungsboden
- 11: Reinigungseinrichtung
- 12: Sieb
- 13: Gebläse
- 14: Luftströmung
- 15: Förderschnecke
- 16: Erntegutstrom
- 17: Korn-Stroh-Trenneinrichtung
- 18: Hordenschüttler
- 19: Erntegutstrom
- 20: Rücklaufboden
- 21: Erntegutstrom
- 22: Körner
- 23: Abscheideorgane
- 24: Axialtrennrotor
- 25: erntegutabscheidender Bereich
- 26: Abscheidesensoren
- 27: Stabsensoren
- 28: Trennfläche
- 29: erntegutabscheidender Bereich
- 30: Abscheidesensor
- 31: Stabsensor
- 32: Quersteg
- 33: Datenübertragungssystem
- 34: Auswerteinheit
- 35: Rechenschritt
- 36: Rechenschritt
- 37: Rechenschritt
- 38: Kennlinie
- 39: Rechenschritt
- 40: Anzeige
- 41: Blockbild
- 42: Kornverlustsensor
- 43: Kornmengensensorik
- 44: Kornelevator
- 45: Rechenschritt

- AE: Abscheideeffizienzwert
- AEm: mittlerer Abscheideeffizienzwert
- AV: Abscheideverlauf
- A1-20: Abscheidezone
- KS1: Körnermassesignal
- KS2: Körnermassesignal
- L: Abscheidelänge
- V: Verlustwert
- VM: Verlustmasse
- X: Erntegutmengensignal
- Xa..c: Erntegutmengensignal
- Y: Kenngröße

## Patentansprüche

1. Verfahren zur Bestimmung des Verlustes einer Erntemaschine, mit einem oder mehreren Abscheideorganen, wobei dem oder den Abscheideorganen in ihrem erntegutabscheidenden Bereich zumindest ein Abscheidesensor zur Generierung zumindest eines der abgeschiedenen Erntegutmenge adäquaten Signals zugeordnet ist und dieses zumindest eine Signal zur Weiterverarbeitung einer Auswerteinheit zugeführt wird, wobei der erntegutabscheidende Bereich (25, 29) des wenigstens einen Abscheideorgans (6, 11, 17, 23) oder der mehreren Abscheideorgane (6, 11, 17, 23) in Abscheidezonen (A1-A20) unterteilt ist, wobei der Abscheideverlauf (AV) zumindest eines Teils der Abscheidezonen (A1-A20) ermittelt wird,
**dadurch gekennzeichnet,**
**dass** der Abscheideverlauf (AV) zumindest eines Teils des Abscheidezone (A1-A20) zu einer Kenngröße (Y) verrechnet wird und für diese ermittelte Kenngröße (Y) in der Auswerteinheit (34) zumindest eine Kennlinie (38) hinterlegt ist aus der sich der der ermittelten Kenngröße (Y) entsprechende Verlust (V) ergibt.

2. Verfahren zur Bestimmung der Verluste einer Erntemaschine nach Anspruch 1,
**dadurch gekennzeichnet,**
**dass** die über der in Gutaustragrichtung letzten Abscheidezone (A20) nicht abgeschiedene, die Verlustmasse (VM) bildende Erntegutmenge (22) vernachlässigt und eine vollständige Abscheidung in dieser letzten Abscheidezone (A20) angenommen wird.

3. Verfahren zur Bestimmung der Verluste einer Erntemaschine nach einem oder mehreren Ansprüche,
**dadurch gekennzeichnet,**
**dass** der erntegutabscheidende Bereich (25, 29) des oder der Abscheideorgane (6, 11, 17, 23) in aneinandergrenzende Abscheidezonen (A1-A20) unterteilt ist und jeder Abscheidezone (A1-A20) zumindest ein Abscheidesensor (26, 30) zur Generierung zumindest eines der abgeschiedenen Erntegutmenge (9, 19) adäquaten Signals (X1-X20, Xa..c) zugeordnet ist.

4. Verfahren zur Bestimmung der Verluste einer Erntemaschine nach einem oder mehreren der vorhergehenden Ansprüche,
**dadurch gekennzeichnet,**
**dass** die der abgeschiedenen Erntegutmenge (9, 19) adäquaten Signale (X1-X20, Xa..c) einer Abscheidezone (A1-A20) in der Auswerteinheit (34) zu einem Abscheideeffizienzwert (AE) verrechnet werden.

5. Verfahren zur Bestimmung der Verluste einer Erntemaschine nach einem oder mehreren der vorhergehenden Ansprüche,
**dadurch gekennzeichnet,**
**dass** der Abscheideeffizienzwert (AE) durch Integration des Abscheideverlaufs (AV) innerhalb der jeweiligen Abscheidezone (A1-A20) ermittelt wird und sich aus dem Verhältnis zwischen dem über der jeweiligen Abscheidezone (A1-A20) abgeschiedenen Erntegutmenge (9, 19) und der dieser Abscheidezone (A1-A20) zugeführten abzuscheidenden Erntegutmenge (22) ergibt.

6. Verfahren zur Bestimmung der Verluste einer Erntemaschine nach einem oder mehreren der vorhergehenden Ansprüche,
**dadurch gekennzeichnet,**
**dass** die Abscheideeffizienzwerte (AE) zumindest eines Teils der Abscheidezonen (A1-A20) zu einem mittleren Abscheideeffizienzwert (AEm) verrechnet werden und dieser mittlere Abscheideetfizienzwert (AEm) die Kenngröße (Y) zur Ermittlung des Verlustwertes (V) bildet.

7. Verfahren zur Bestimmung der Verluste einer Erntemaschine nach einem oder mehreren der vorhergehenden Ansprüche,
**dadurch gekennzeichnet,**
**dass** die in der Auswerteinheit (34) hinterlegte zumindest eine Kennlinien (38) den Verlust (V) in Abhängigkeit vom mittleren Abscheideeffizienzwert (AEm) darstellt.

8. Verfahren zur Bestimmung der Verluste einer Erntemaschine nach Anspruch 7,
**dadurch gekennzeichnet,**
**dass** die wenigstens eine Kennlinie (38) in Abhängigkeit von erntegutspezifischen Parametern hinterlegt ist.

9. Verfahren zur Bestimmung der Verluste einer Erntemaschine nach Anspruch 8,
**dadurch gekennzeichnet,**
**dass** die erntegutspezifischen Parameter die Gutart und/oder die Erntegutfeuchte sein können.

10. Verfahren zur Bestimmung der Verluste einer Erntemaschine nach einem oder mehreren der vorhergehenden Ansprüche,
**dadurch gekennzeichnet,**
**dass** in der Auswerteinheit (34) eine Vielzahl von Kennlinien (38) hinterlegt sind.

11. Verfahren zur Bestimmung der Verluste einer Erntemaschine nach einem oder mehreren der vorhergehenden Ansprüche,
**dadurch gekennzeichnet,**
**dass** die in der Auswerteinheit (34) hinterlegten Kennlinien (38) änderbar sind.

12. Verfahren zur Bestimmung der Verluste einer Erntemaschine nach Anspruch 11,
**dadurch gekennzeichnet,**
**dass** zur Änderung der Kennlinien (38) die der abgeschiedenen Erntegutmenge (9, 19) adäquaten Signale (X1-X20, Xa..c) der Abscheidesensoren (26, 30) in Abhängigkeit von verschiedenen Emtegutdurchsätzen in der Auswerteinheit (34) zu mittleren Abscheideeffizienzwerten (AEm) verrechnet werden, wobei jeweils Verlustwerte (V) und mittlere Abscheideeffizienzwerte (AEm) eines Durchsatzes ein Wertepaar der neu zu generierenden Kennlinie (38) bilden.

13. Verfahren zur Bestimmung der Verluste einer Erntemaschine nach Anspruch 12,
**dadurch gekennzeichnet,**
**dass** die den mittleren Abscheideeffizienzwerten (AEm) zugeordneten Verlustwerte (V) auf der Erntemaschine (1, 2) und/oder separat von dieser ermittelt und in der Auswerteinheit (34) hinterlegt werden.

14. Vorrichtung zur Durchführung des Verfahrens zur Bestimmung des Verlustes einer Erntemaschine nach Anspruch 1, wobei dem oder den Arbeitsorganen (6, 11, 17, 23) ein oder mehrere Abscheidesensoren (26, 30) im erntegutabscheidenden Bereich (25, 29) zugeordnet sind, die mittels Datenübertragungsystemen (33) mit einer Auswerteinheit (34) in Wirkverbindung stehen und die Abscheidesensoren (26, 30) den erntegutabscheidenden Bereich (25, 29) in voneinander getrennte Abscheidezonen (A1-A20) unterteilen
**dadurch gekennzeichnet,**
**dass** in der Auswertereinheit (34) zumindest eine Kennlinie (38) hinterlegt ist, aus der sich für die ermittelte Kenngröße (Y) ein Verlustwert (V) ergibt.

15. Vorrichtung zur Bestimmung des Verlustes einer Erntemaschine nach Anspruch 14,
**dadurch gekennzeichnet,**
**dass** die voneinander getrennten Abscheidezonen (A1-A20) durch ortsfeste Trennelemente (32) und/oder software-seitig in der Auswerteinheit (34) voneinander abgegrenzt sind.

## Claims

1. A method of determining the loss of a harvesting machine comprising one or more separating members, wherein associated with the separating member or members in the crop material-separating region thereof is at least one separation sensor for generating at least one signal suited to the separated amount of crop material and said at least one signal is fed for further processing to an evaluation unit, wherein the crop material-separating region (25, 29) of the at least one separating member (6, 11, 17, 23) or the plurality of separating members (6, 11, 17, 23) is subdivided into separating zones (A1-A20), wherein the separating progress (AV) of at least some of the separating zones (A1-A20) is ascertained,
**characterised in that**
the separating progress (AV) of at least some of the separating zones (A1-A20) is converted to a characteristic quantity (Y) and at least one characteristic curve (38) is stored for said ascertained characteristic quantity (Y) in the evaluation unit (34), the characteristic curve giving the loss (V) corresponding to the ascertained characteristic quantity (Y).

2. A method of determining the losses of a harvesting machine according to claim 1 **characterised in that characterised in that** the amount of crop material (22) which is not separated over the last separating zone (A20) in the material discharge direction and which forms the loss mass (VM) is disregarded and complete separation is assumed in said last separating zone (A20).

3. A method of determining the losses of a harvesting machine according to one or more claims **characterised in that** the crop material-separating region (25, 29) of the separating member or members (6, 11, 17, 23) is subdivided into mutually adjoining separating zones (A1-A20) and associated with each separating zone (A1-A20) is at least one separation sensor (26, 30) for generating at least one signal (X1-X20, Xa...c) suited to the separated amount of crop material (9, 19).

4. A method of determining the losses of a harvesting machine according to one or more of the preceding claims **characterised in that** the signals (X1-X20, Xa...c) of a separating zone (A1-A20), which are suited to the separated amount of crop material (9, 19), are converted in the evaluation unit (34) to a separation efficiency value (AE).

5. A method of determining the losses of a harvesting machine according to one or more of the preceding claims **characterised in that** the separation efficiency value (AE) is ascertained by integration of the separation progress (AV) within the respective separating zone (A1-A20) and is produced from the relationship between the amount of crop material (9, 19) which is to be separated over the respective separating zone (A1-A20) and the amount of crop material (22) which is to be separated and which is fed to said separating zone (A1-A20).

6. A method of determining the losses of a harvesting machine according to one or more of the preceding claims **characterised in that** the separation efficiency values (AE) of at least some of the separating zones (A1-A20) are converted to a mean separation efficiency value (AEm) and said mean separation efficiency value (AEm) forms the characteristic quantity (Y) for ascertaining the loss value (V).

7. A method of determining the losses of a harvesting machine according to one or more of the preceding claims **characterised in that** the at least one characteristic curve (38) stored in the evaluation unit (34) represents the loss (V) in dependence on the mean separation efficiency value (AEm).

8. A method of determining the losses of a harvesting machine according to claim 7 **characterised in that** the at least one characteristic curve (38) is stored in dependence on crop material-specific parameters.

9. A method of determining the losses of a harvesting machine according to claim 8 **characterised in that** the crop material-specific parameters can be the kind of material and/or the crop material moisture content.

10. A method of determining the losses of a harvesting machine according to one or more of the preceding claims **characterised in that** a plurality of characteristic curves (38) are stored in the evaluation unit (34).

11. A method of determining the losses of a harvesting machine according to one or more of the preceding claims **characterised in that** the characteristic curves (38) stored in the evaluation unit (34) are variable.

12. A method of determining the losses of a harvesting machine according to claim 11 **characterised in that** to vary the characteristic curves (38) the signals (X1-X20, Xa...c) of the separation sensors (26, 30), that are suited to the separated amount of crop material (9, 19), are converted in dependence on various crop material throughputs in the evaluation unit (34) to mean separation efficiency values (AEm), wherein respective loss values (V) and mean separation efficiency values (AEm) of a throughput form a pair of values in respect of the characteristic curve (38) which is to be freshly generated.

13. A method of determining the losses of a harvesting machine according to claim 12 **characterised in that** the loss values (V) associated with the mean separation efficiency values (AEm) are ascertained on the harvesting machine (1, 2) and/or separately from same and stored in the evaluation unit (34).

14. Apparatus for carrying out the method of determining the loss of a harvesting machine according to claim 1 wherein one or more separation sensors (26, 30) are associated with the working member or members (6, 11, 17, 23) in the crop material-separating region (25, 29), which sensors are in operative communication with an evaluation unit (34) by means of data transmission systems (33), and the separation sensors (26, 30) subdivide the crop material-separating region (25, 29) into separating zones (A1-A20) which are separate from each other,
**characterised in that**
stored in the evaluation unit (34) is at least one characteristic curve (38) giving a loss value (V) for the ascertained characteristic quantity (Y).

15. Apparatus for determining the loss of a harvesting machine according to claim 14 **characterised in that** the mutually separate separating zones (A1-A20) are delimited from each other by stationary separating elements (32) and/or in software terms in the evaluation unit (34).

## Revendications

1. Procédé de détermination des pertes d'une machine de récolte comprenant un ou plusieurs organes de séparation, où au moins un capteur de séparation, destiné à générer au moins un signal correspondant à la quantité de matières récoltées séparée, est associé à l'organe de séparation ou aux organes de séparation, dans leur section de séparation de matières récoltées, et ledit signal, au nombre d'au moins un, est transmis à une unité de traitement, en vue d'un traitement ultérieur, et où la section (25, 29) de séparation de matières récoltées de l'organe de séparation (6, 11, 17, 23), au nombre d'au moins un, ou de la pluralité d'organes de séparation (6, 11, 17, 23) est divisée en zones de séparation (A1-A20), et le déroulement de la séparation (AV) d'au moins une partie des zones de séparation (A1-A20) est déterminé, **caractérisé par le fait que** le déroulement de séparation (AV) d'au moins une partie des zones de séparation (A1-A20) est utilisé pour calculer une grandeur caractéristique (Y), et au moins une courbe caractéristique (38) est enregistrée dans l'unité de traitement (34) pour cette grandeur caractéristique (Y) déterminée, courbe à partir de laquelle on obtient les pertes (V) correspondant à la grandeur caractéristique (Y) déterminée.

2. Procédé de détermination des pertes d'une machine de récolte selon la revendication 1, **caractérisé par le fait que** l'on néglige la quantité de matières récoltées (22) qui n'est pas séparée dans la dernière zone de séparation (A20), vue dans la direction d'évacuation de matière, et qui constitue la masse perdue (VM), et on suppose que la séparation dans cette dernière zone de séparation (A20) est complète.

3. Procédé de détermination des pertes d'une machine de récolte selon une ou plusieurs des revendications précédentes, **caractérisé par le fait que** la section (25, 29) de séparation de matières récoltées du ou des organes de séparation (6, 11, 17, 23) est divisée en zones de séparation (A1-A20) contiguës et qu'il est associé à chaque zone de séparation (A1-A20), au moins un capteur de séparation (26, 30) destiné à générer au moins un signal (X1-X20, Xa..c) correspondant à la quantité de matières récoltées séparée (9, 19).

4. Procédé de détermination des pertes d'une machine de récolte selon une ou plusieurs des revendications précédentes, **caractérisé par le fait que** les signaux (X1-X20, Xa..c) correspondant à la quantité de matières récoltées séparée (9, 19) d'une zone de séparation (A1-A20) sont utilisés dans l'unité de traitement (34) pour calculer une valeur d'efficacité de séparation (AE).

5. Procédé de détermination des pertes d'une machine de récolte selon une ou plusieurs des revendications précédentes, **caractérisé par le fait que** la valeur d'efficacité de séparation (AE) est déterminée par intégration du déroulement de séparation (AV) à l'intérieur de la zone de séparation (A1-A20) concernée et est donnée par le rapport entre la quantité de matières récoltées (9, 19) séparée au-dessus de la zone de séparation (A1-A20) concernée et la quantité de matières récoltées (22) acheminée à cette zone de séparation (A1-A20) et devant être séparée.

6. Procédé de détermination des pertes d'une machine de récolte selon une ou plusieurs des revendications précédentes, **caractérisé par le fait que** les valeurs d'efficacité de séparation (AE) d'au moins une partie des zones de séparation (A1-A20) sont utilisées pour calculer une valeur d'efficacité de séparation moyenne (AEm) et que cette valeur d'efficacité de séparation moyenne (AEm) constitue la grandeur caractéristique (Y) pour déterminer la valeur de perte (V).

7. Procédé de détermination des pertes d'une machine de récolte selon une ou plusieurs des revendications précédentes, **caractérisé par le fait que** la courbe caractéristique (38), au nombre d'au moins une, qui est enregistrée dans l'unité de traitement (34), représente la perte (V) en fonction de la valeur d'efficacité de séparation moyenne (AEm).

8. Procédé de détermination des pertes d'une machine de récolte selon la revendication 7, **caractérisé par le fait que** la courbe caractéristique (38), au nombre d'au moins une, est enregistrée en fonction de paramètres spécifiques aux matières récoltées.

9. Procédé de détermination des pertes d'une machine de récolte selon la revendication 8, **caractérisé par le fait que** les paramètres spécifiques aux matières récoltées peuvent être le type de matière et/ou l'humidité des matières récoltées.

10. Procédé de détermination des pertes d'une machine de récolte selon une ou plusieurs des revendications précédentes, **caractérisé par le fait qu'**une pluralité de courbes caractéristiques (38) sont enregistrées dans l'unité de traitement (34).

11. Procédé de détermination des pertes d'une machine de récolte selon une ou plusieurs des revendications précédentes, **caractérisé par le fait que** les courbes caractéristiques (38) enregistrées dans l'unité de traitement (34) sont modifiables.

12. Procédé de détermination des pertes d'une machine de récolte selon la revendication 11, **caractérisé par le fait que** pour modifier les courbes caractéristiques (38), les signaux (X1-X20, Xa..c) des capteurs de séparation (26, 30) qui correspondent à la quantité de matières récoltées séparée (9, 19) sont utilisés dans l'unité de traitement (34) pour calculer des valeurs d'efficacité de séparation moyennes (AEm), en fonction de différents débits de matières récoltées, des valeurs de perte (V) et des valeurs d'efficacité de séparation moyennes (AEm) d'un débit formant chaque fois une paire de valeurs de la nouvelle courbe caractéristique (3 8) à générer.

13. Procédé de détermination des pertes d'une machine de récolte selon la revendication 12, **caractérisé par le fait que** les valeurs de perte (V) associées aux valeurs d'efficacité de séparation moyennes (AEm) sont déterminées sur la machine de récolte (1, 2) et/ou séparément de celle-ci et sont enregistrées dans l'unité de traitement (34).

14. Dispositif pour la mise en oeuvre du procédé de détermination des pertes d'une machine de récolte selon la revendication 1, où un ou plusieurs capteurs de séparation (26, 30) est/sont associé(s) à l'organe de séparation ou aux organes de séparation (6, 11, 17, 23), dans la section (25, 29) de séparation de matières récoltées, et sont en liaison active avec une unité de traitement (34), par l'intermédiaire de systèmes de transmission de données (33), et où les capteurs de séparation (26, 30) divisent la section (25, 29) de séparation de matières récoltées en zones de séparation (A1-A20) séparées les unes des autres, **caractérisé par le fait qu'**au moins une courbe caractéristique (38) est enregistrée dans l'unité de traitement (34), à partir de laquelle on obtient une valeur de perte (V) pour la grandeur caractéristique (Y) déterminée.

15. Dispositif de détermination des pertes d'une machine de récolte selon la revendication 14, **caractérisé par le fait que** les zones de séparation (A1-A20) séparées les unes des autres sont délimitées les unes par rapport aux autres par des éléments de séparation (32) fixes et/ou par un logiciel prévu dans l'unité de traitement (34).
